# EUROPEAN PATENT APPLICATION

(11) **EP 2 292 570 A1**
(43) Date of publication of application: **09.03.2011**
(21) Application number: 10171156.2
(22) Date of filing: 28.07.2010
(51) Int. Cl.: C04B 35/83, C04B 41/50, C04B 41/85, F16D 65/12, F16D 69/02

(54) **Method of preventing carbon friction material anti oxidation system migration by utilizing carbon vapor deposition**

(30) Priority: 05.08.2009 US 536293
(71) Applicant: Honeywell International Inc., Morristown, NJ 07962 (US)
(72) Inventor: Fryska, Slawomir, Morristown, NJ 07962-2245 (US); La Forest, Mark L., Morristown, NJ 07962-2245 (US)
(74) Representative: Buckley, Guy Julian

(57) **Abstract**

Method of protecting carbon-carbon composite brake disc against migration of anti-oxidant composition through the porosity of the composite brake disc. The method starts with a porous carbon-carbon composite brake disc, and densifies it to a density of 1.70 grams per cubic centimeter or higher. The densified brake disc is then machine to the required dimensions. The pores in the densified brake disc are closed by subjecting it to CVD/CVI processing employing (i) a gaseous feedstock comprising natural gas spiked with 10 to 25% of a more reactive gas, and/or (ii) a temperature in the range of 1100 °C to 1500 °C, and/or (iii) a gas pressure in the range 10 to 100 torr, and/or (iv) a gas flow rate of 300 cc/min to 450 cc/min. CVD/CVI processing carried out using these parameters deposits carbon within and closes the pores of the surface area of the carbon-carbon composite brake disc. Subsequently, an anti-oxidant solution is applied to the non-friction surfaces of the resulting carbon-carbon composite brake disc. Due to the fact that the surface pores have been closed by processing using the specified conditions, the composite brake disc resists migration of the anti-oxidant through the body of the disc to the friction surfaces thereof.

## Description

### FIELD OF THE INVENTION

This invention relates to a method of manufacturing carbon-carbon composite materials which are to be treated with oxidation-resistant coating compositions. This invention also contemplates methods for the preparation of the oxidatively protected composites. This invention is of particular utility in the field of aircraft braking systems.

### BACKGROUND OF THE INVENTION

Carbon-carbon composites are a class of materials whose properties, especially at elevated temperatures, make them particularly useful for various aerospace applications. The materials are composites, although often all the composite elements are comprised essentially of carbon in various allotropic forms. Factors such as the degree of graphitization, purity, pore structure, specific surface areas, surface complexes, oxygen availability, and temperature have a strong influence on the oxidation of carbon materials. Oxidation of carbon-carbon composites at elevated temperatures in an atmospheric environment has a catastrophic effect on the mechanical properties of the composites. Some form of oxidation protection is required in order to maintain structural and functional capability. Much effort has been expended to develop technologies for preventing carbon oxidation. The following publications exemplify such technologies.

US 5,401,440, entitled INHIBITION OF CATALYZED OXIDATION OF CARBON-CARBON COMPOSITES, discloses a method of inhibiting catalyzed oxidation of carbon-carbon composites that comprises treating a carbon-carbon composite with a catalyzed-oxidation-inhibiting aqueous mixture and heating the treated composite to a temperature sufficient to remove water therefrom.

US 6,551,709 B2, entitled METHODS OF INHIBITING CATALYZED OXIDATION OF CARBON-CARBON COMPOSITES USING PHOSPHORIC ACID, A ZINC SALT, AND AN ALUMINUM SALT AND ARTICLES MADE THEREFROM, discloses a method of inhibiting catalyzed oxidation of carbon-carbon composites that comprises treating a carbon-carbon composite which has pores with a liquid composition containing phosphoric acid, a zinc salt, and an aluminum salt and heating the treated composite to a temperature sufficient to form deposits within the pores.

US 2007/0154712 A1, entitled OXIDATION INHIBITION OF CARBON-CARBON COMPOSITES, describes a technology in which a barrier coating may be applied to a surface of a carbon-carbon composite prior to or subsequent to treatment with an oxidation inhibiting composition and/or pretreating composition. The barrier coating materials include carbides or nitrides, such as boron nitride, silicon carbide, titanium carbide, boron carbide, silicon oxycarbide, silicon nitride, and mixtures thereof.

US 2007/0199626 A1, entitled PROTECTION AGAINST THE OXIDATION OF COMPOSITE MATERIAL PARTS CONTAINING CARBON AND PARTS THUS PROTECTED, describes a technology that provides a part made of a composite material containing carbon, having an open internal residual porosity. The part is protected against oxidation by applying an impregnating composition, said impregnating composition containing a metal phosphate and titanium diboride. Efficient protection against oxidation is thus obtained at temperatures of more than 1000°C, even in the presence of carbon oxidation catalysts and moist conditions.

US 2007/0218208 A1, entitled BI- OR TRI-LAYER ANTI-OXIDATION SYSTEM FOR CARBON COMPOSITE BRAKES, describes a method of protecting a carbon-carbon composite brake disc or a carbon-carbon-silicon carbide composite brake disc against oxidation. The method includes: coating the composite brake disc with a first phosphoric acid-based penetrant system; curing the penetrant coating at 200°C or above to form a first coating on the disc; applying a ceramic coating over the first coating and curing the ceramic coating at a temperature below 200°C to form a second coating on the disc; and optionally coating the coated composite brake disc so obtained with a second phosphoric acid-based penetrant system, which would be cured at ≥ 200°C to form a third coating.

U.S. patent application Serial No. 12/473,857, filed May 28, 2009, entitled TITANIUM CARBIDE OR TUNGSTEN CARBIDE WITH COMBUSTION SYNTHESIS TO BLOCK POROSITY IN C-C BRAKE DISCS FOR ANTIOXIDATION PROTECTION, discloses applying a metal powder (e.g., W or Ti) to the surface of the area of a carbon-carbon composite brake disc to be protected against migration of antioxidant. A chemical reaction between the metal powder and carbon is then initiated by heating the powder-coated brake to ignition temperature. Upon combustion, the metal particles react with carbon in the composite, forming liquid carbide that flows into pores of the composite brake disc to be protected. This prevents migration of the antioxidant solution to the friction surfaces of the brake disc.

Conventional antioxidant systems for carbon-carbon composite brake discs - including some of those discussed above - may fail due to temperature of use, runway de-icers, and humidity. In some cases, migration of the antioxidant within the carbon-carbon composite can lead to detrimental effects in oxidation protection effectiveness and braking performance.

### SUMMARY OF THE INVENTION

The present invention addresses the problem discussed above by blocking porosity in the carbon-carbon composite brake discs, thereby preventing the anti-oxidant composition from migrating through the porosity of the discs. In accordance with the present invention, open porosity in the carbon-carbon composite brake discs - which is necessary during the manufacturing process to permit densification of the discs - is closed using a specially designed Carbon Vapor Deposition ("CVD") process.

Method of protecting carbon-carbon composite brake disc against migration of anti-oxidant composition through the porosity of the composite brake disc. The method starts with a porous carbon-carbon composite brake disc, and densifies it to a density of 1.70 grams per cubic centimeter or higher. The densified brake disc is then machine to the required dimensions. The pores in the densified brake disc are closed by subjecting it to CVD/CVI processing employing (i) a gaseous feedstock comprising natural gas spiked with 10 to 25% of a more reactive gas, and/or (ii) a temperature in the range of 1100 °C to 1500 °C, and/or (iii) a gas pressure in the range 10 to 100 torr, and/or (iv) a gas flow rate of 300 cc/min to 450 cc/min. CVD/CVI processing carried out using these parameters deposits carbon within and closes the pores of the surface area of the carbon-carbon composite brake disc. Subsequently, an anti-oxidant solution is applied to the non-friction surfaces of the resulting carbon-carbon composite brake disc. Due to the fact that the surface pores have been closed by processing using the specified conditions, the composite brake disc resists migration of the anti-oxidant through the body of the disc to the friction surfaces thereof.

Chemical vapor deposition (CVD) of carbon is also known as chemical vapor infiltration (CVI). In a CVD/CVI process, carbonized, and optionally heat treated, preforms are heated in a retort under the cover of inert gas, typically at a pressure below 100 torr. When the parts reach a temperature of 900° to 1200°C., the inert gas is replaced with a carbon-bearing gas such as methane, ethane, propane, butane, propylene, or acetylene, or combinations of these gases. When the hydrocarbon gas mixture flows around and through the porous structures, a complex set of dehydrogenation, condensation, and polymerization reactions occur, thereby depositing the carbon atoms within the interior and onto the surface of the porous structures. Over time, as more and more of the carbon atoms are deposited onto the structures, the porous structures become more dense. This process is sometimes referred to as densification, because the open spaces in the porous structures are eventually filled with a carbon matrix until generally solid carbon parts are formed. Depending upon the pressure, temperature, and gas composition, the crystallographic structure and order of the deposited carbon can be controlled, yielding anything from an isotropic carbon to a highly anisotropic, ordered carbon. US 2006/0046059 A1 (Arico et al.), the disclosure of which is incorporated herein by reference, provides an overview of CVD/CVI processing.

In general, carbon-carbon composite materials are densified by cyclically filling open porosity in preforms made from carbon fiber precursors which contain a resin binder and/or which have been infiltrated by liquid pitch compositions. Therefore, open porosity is necessary during the process of manufacturing dense carbon-carbon composite materials for such applications as brake discs. The present invention employs specially formulated CVD processing after the brake disc is at or near its desired density, in order to close the porosity and thereby prevent migration of antioxidant solution through the brake disc. This is achieved by adjusting CVD gas composition, temperature, pressure, and duration, so that the surface chemical reaction rate of depositing carbon during the CVD/CVI process is faster than the diffusion rate of active gases into the open porosity of the composite. This pore-closing CVD step is used at the end of the disc manufacturing process, after final machining, but before antioxidant solution is applied.

Unlike conventional CVD processing, which is used to maximize weight pickup while maintaining open porosity, the objective of the present invention is to quickly and economically close the surface porosity in the brake disc, without regard to weight gain.

### DETAILED DESCRIPTION OF THE INVENTION

It should be understood that the detailed description and specific examples which follow, while indicating preferred embodiments of the invention, are given by way of illustration only, since various changes and modifications within the spirit and scope of the invention will become apparent to those skilled in the art as a result of this detailed description.

Carbon composite brake discs can be prepared according to a variety of standard industrial processes. A brake disc preform can be fabricated using a textile process of needling a nonwoven fabric made of polyacrylonitrile (PAN) fiber, followed by carbonization in a neutral atmosphere, or it could be created by molding a pitch fiber pre-preg followed by a carbonization process. A carbonized preform can be densified using a variety of different processes, such as carbon Chemical Vapor Deposition (CVD), Vacuum Pitch Infiltration (VPI), Resin Transfer Molding (RTM) techniques, or any combination of those techniques, to economically achieve the desired functional and operational characteristics of the finished carbon composite material.

In conventional CVD/CVI densification methods, hot hydrocarbon gases are caused to flow around and through stacks of brake discs, thereby depositing a carbon matrix within the interior regions and on the surface of the porous brake disc structures. The absolute gas pressure for the furnace is typically about 5-40 torr, the temperature range is typically about 950-1100° C, and the densification time is typically from 150 to 900 hours. Natural gas may be used in CVD/CVI densification methods. One may use, for instance, 100% natural gas. Natural gas typically comprises 92-96% methane, up to 5% ethane, up to 1% propane, up to 0.5% butane, and very small amounts of pentane and hexane.

As indicated above, in the present invention - unlike in the case of conventional CVD processing, which is used to maximize weight pickup while maintaining open porosity - a significant objective of this invention is to quickly and economically close the surface porosity in the brake disc, without regard to weight gain.

One means of accomplishing this closure of surface porosity in this invention is changing the composition of the carbon bearing gases in the CVD/CVI process by including a large proportion of the more reactive gases, such as propane, therein. Higher proportions of propane or other reactive gases increases the reaction rate, thus causing most of the deposition to occur at the surface of the composite and plug the surface porosity. Typical percentages of propane doping in accordance with this invention is within the range 10%-15%.

In another example, the reaction rate may be increased by increasing the CVD/CVI reaction temperature above the temperature used to deposit carbon atoms within the composite porosity (densification). Typical elevated CVD/CVI process temperatures utilized in this case are in the range of 1100°C to 1200°C. This way of increasing the reaction rate also leads to preferential deposition of carbon atoms at the surface of the composite and plugging of the open porosity.

The third approach involves to closing surface porosity involves increasing the CVD/CVI pressure above those typically used during the densification CVD/CVI processes. Typical gas pressures in this approach herein are in the range of 10-50 torr or higher.

Another method for depositing more carbon at the surface of the composite is to decrease the gas diffusion rates into the open porosity. This may be accomplished by increasing the gas flow rate through the CVD/CVI reactor. Typical gas flow rates used in this case are between 300 cc/min to 450 cc/min at the surface of the composite.

Once the carbon-carbon composite brake disc is fabricated in this manner, antioxidant solutions may be applied to it in a conventional manner. Application of antioxidant solutions may be conducted as follows.

### Application of antioxidant protection

First, the C-C composite component is fabricated into a desired shape. The present invention is particularly valuable when the C-C composite component is an aircraft landing system brake disc. Carbon-carbon composites are generally prepared from carbon preforms. Carbon preforms are made of carbon fibers, formed for instance from fibers of pre-oxidized polyacrylonitrile (PAN). These fibers can be layered together to form shapes, such as friction brake discs, which shapes are then heated and infiltrated with methane or another pyrolyzable carbon source to form the C-C composite preforms. Carbon-carbon composites useful in accordance with the present invention typically have densities in the range of from about 1.6 g/cm³ through 2.0 g/cm³. Methods of manufacturing C-C composites are generally well known to those skilled in the art. A good reference in this area is: Buckley et al., Carbon-Carbon Materials and Composites, Noyes Publications, 1993. The entire contents of this publication are hereby expressly incorporated by reference.

For purposes of illustration only, the C-C composite component may be fabricated from woven fabric panes of pitch-based Amoco P30X carbon fiber tows in a harness satin weave or from a pitch-based Nippon XNC25 in a plain weave. The tows are rigidized with a few weight-% carbon-containing resin, such as epoxy Novolac. The material is then carbonized at a temperature in the range of 800-1000°C and densified by carbon CVD. The resulting material is then annealed in an inert gas at a temperature in the range of up to 2600 °C. This process creates a C-C composite component that is adaptable for use in high temperature environments when it is properly protected against oxidation. It is understood that the oxidation protective coating system of the present invention is applicable to C-C composite components regardless of how the C-C composite components are fabricated.

The C-C component preform is immersed or dipped in a liquid oxidation protective penetrant solution for several minutes. Preferred precursors for use in applying the undercoating layer in accordance with the present invention are phosphoric acid-based penetrant salt solutions, which are described in detail in U.S. Patent No. 6,455,159 B1, the entire disclosure of which is hereby expressly incorporated by reference. A typical penetrant salt solution that can be used to form the undercoating herein could contain from 5-80 wt% H₂0, 10-70 wt% H₃PO₄, up to 25 wt% alkali metal mono-, di-, or tri-basic phosphate, and up to 2 wt% B₂O₃. The typical penetrant salt solution will also include at least one of MnHPO₄·1.6H₂O, AlPO₄, and Zn₃(PO₄)₂, in weight-percentages up to 25 wt-%, 30 wt-%, and 10 wt-%, respectively.

In accordance with this invention, the surface of the carbon-carbon composite is treated with the penetrant solution by painting, dipping, spraying, or other conventional application techniques. Subsequently the surface-treated material is cured at a temperature in the range of 250-900°C. Typically, the surface is treated with one to three coats of the penetrant solution, and the peak temperature is generally held for 1 to 6 hours.

The composite component bearing the undercoating is immersed in a fluidized precursor bath or painted with the fluidized precursor to cover the undercoated component with an overcoating. The overcoating may comprise 60-80 wt-% silicate binder (e.g., composed of alkali or alkaline earth metal silicates), up to 20 wt-% alkali metal hydroxide (typically potassium hydroxide or sodium hydroxide) as a pH modifier, and 10-30 wt-% particulate silicon carbide. Cerama-Bind 830, manufactured by Aremco Products, Inc. of Valley Cottage, New York, is a commercially available example of a product which may be used as the silicate binder. Cerama-Bind 830 is a water-miscible silicate-based binder solution. In accordance with a preferred embodiment of this invention, the silicon carbide particles will be submicron size. That is, the silicon carbide particles employed to make overcoating 12 will range in average diameter e.g. from 0.05 to 0.5 microns. A commercially available example of a product which may be used as the particulate silicon carbide component of the present invention is Silicon Carbide Item #44647, a 0.1-0.2 micron silicon carbide powder available from Alfa Aesar (a Johnson Matthey Company) of Ward Hill, Massachusetts. A specific embodiment of overcoating layer 12 in accordance with this invention could contain 71.2 weight-% Cerama-Bind 830, 9 weight-% potassium hydroxide, and 19.8 weight-% sub-micron particle size silicon carbide, 325 mesh, from Alfa Aesar.

The C-C component with its solid glass undercoating is immersed or dipped in a liquid bath precursor of fluidized silicon carbide-particle suspension for several minutes. The liquid precursor is maintained at a temperature in the range of approximately 20-90°C. The component may be rotated relative to the liquid precursor to improve the wetting characteristics and uniformity of the coating.

The fluidized SiC particles-silicate-hydroxide-containing coating is converted to a solid coating by air-drying at ambient temperatures. If desired, drying may be accelerated by gentle heating. This results in completely coating the composite, and, with the solid glass coating, a protective barrier against undesirable oxidation of C-C component.

### EXAMPLES

The following general and specific examples of processes which may be carried out in accordance with the present invention are illustrative of the invention, but should not be construed as limiting thereof

In a general example of manufacturing brake discs in accordance with the present invention, one provides a porous carbon-carbon composite brake disc, densifies the brake disc to a density of 1.70 grams per cubic centimeter or higher, and machines the densified brake disc to the required dimensions. In order to protect the carbon-carbon composite brake disc against migration of anti-oxidant composition through the porosity of the composite brake disc, one closes the pores in the densified brake disc by subjecting it to CVD/CVI processing employing a gaseous feedstock comprising of natural gas spiked with 15% propane at a temperature in the range of 1050°C to 1100°C and a pressure in the range 20 to 50 torr for a period of time of around 100 hours, thereby depositing carbon within and closing the pores of the surface area of the carbon-carbon composite brake disc. After the disc is produced as described, one applies an anti-oxidant solution to the non-friction surfaces of the resulting carbon-carbon composite brake disc. The composite brake disc manufactured in this way resists migration of the anti-oxidant through the body of the disc to the friction surfaces thereof.

Example 1. In this CVD/CVI densification method, hot hydrocarbon gases are caused to flow around and through stacks of brake discs, thereby depositing a carbon matrix within the interior regions and on the surface of the porous brake disc structures. The absolute gas pressure for the furnace is about 5-40 torr, the temperature range is about 950-1100° C, and the densification time is from 50 to 500 hours. The gas mixture used in this Example of the present CVD/CVI densification method comprises 90 to 85% natural gas and 10 to 15% propane.

Example 2. In this CVD/CVI densification method, hot hydrocarbon gases are caused to flow around and through stacks of brake discs, thereby depositing a carbon matrix within the interior regions and on the surface of the porous brake disc structures. The absolute gas pressure for the furnace is about 5-40 torr, the temperature range is elevated to the range 1100°C to 1200°C, and the densification time is from 50 to 500 hours. The gas mixture used in this Example of the present CVD/CVI densification method may be 100% natural gas or natural gas spiked with up to 15% propane.

Example 3. In this CVD/CVI densification method, hot hydrocarbon gases are caused to flow around and through stacks of brake discs, thereby depositing a carbon matrix within the interior regions and on the surface of the porous brake disc structures. The absolute gas pressure for the furnace is elevated to about 10-50 torr, the temperature range is about 950-1100° C, and the densification time is from 50 to 500 hours. The gas mixture used in this Example of the present CVD/CVI densification method may be natural gas spiked with from 2% to 15% propane.

Example 4. In this CVD/CVI densification method, hot hydrocarbon gases are caused to flow around and through stacks of brake discs, thereby depositing a carbon matrix within the interior regions and on the surface of the porous brake disc structures. The absolute gas pressure for the furnace is about 5-40 torr, the temperature range is about 950-1100° C, and the densification time is from 50 to 500 hours. In this Example, more carbon is deposited at the surface of the composite by decreasing the gas diffusion rates into the open porosity. This is accomplished by increasing the gas flow rate through the CVD/CVI reactor. The gas flow rates used in this case are between 300 cc/min to 450 cc/min at the surface of the composite. The gas mixture used in this Example of the present CVD/CVI densification method may be 100% natural gas or natural gas spiked with up to 15% propane.

The invention being thus described, it will be manifest to persons skilled in the art that the same may be varied in many ways. Such variations are not to be regarded as a departure from the spirit and scope of the invention, and all such modifications as would be obvious to one skilled in the art are intended to be included within the scope of the following claims.

## Claims

1. A method of protecting a carbon-carbon composite brake disc against migration of anti-oxidant composition through the porosity of the composite brake disc, which method comprises:
providing a porous carbon-carbon composite brake disc;
densifying said brake disc to a density of 1.70 grams per cubic centimeter or higher;
machining said densified brake disc to the required dimensions;
closing the pores in the densified brake disc by subjecting it to chemical vapor deposition / chemical vapor infiltration (CVD/CVI) processing employing
(i) a gaseous feedstock comprising natural gas spiked with 10 to 25% of a more reactive gas, and
(ii) a temperature in the range of 1050°C to 1500°C, and
(iii) a gas pressure in the range 10 to 100 torr, and
(iv) a gas flow rate of 300 cc/min to 450 cc/min, thereby depositing carbon within and closing the pores of the surface area of the carbon-carbon composite brake disc; and subsequently
applying an anti-oxidant solution to the non-friction surfaces of the resulting carbon-carbon composite brake disc.

2. The method of claim 1, wherein (i) the gaseous feedstock comprises natural gas spiked with 10%-15% propane.

3. The method of claim 2, wherein (i) the gaseous feedstock comprises natural gas spiked with 15% propane.

4. The method of claim 1, wherein (ii) the CVD/CVI process temperature utilized is in the range of 1100°C to 1200°C.

5. The method of claim 1, wherein (ii) the CVD/CVI process temperature utilized is in the range of 1050°C to 1100°C.

6. The method of claim 1, wherein (iii) the pressure of the gas use in the CVD/CVI processing is in the range of 10-50 torr.

7. The method of claim 6, wherein (iii) the pressure of the gas use in the CVD/CVI processing is in the range of 20-50 torr.

8. The method of claim 1, wherein (iv) the gas flow rate through the CVD/CVI reactor is increased to between 300 cc/min to 450 cc/min at the surface of the composite.

9. The method of claim 1, wherein CVD/DVI processing is conducted for a period of time of approximately 100 hours.

10. A method of protecting a carbon-carbon composite brake disc against migration of anti-oxidant composition through the porosity of the composite brake disc according to claim 1, which comprises:
providing a porous carbon-carbon composite brake disc;
densifying said brake disc to a density of 1.70 grams per cubic centimeter or higher;
machining said densified brake disc to the required dimensions;
closing the pores in the densified brake disc by subjecting it to CVD/CVI processing employing a gaseous feedstock comprising of natural gas spiked with 15% propane at a temperature in the range of 1050°C to 1100°C and a pressure in the range 20 to 50 torr for a period of time of about 100 hours, thereby depositing carbon within and closing the pores of the surface area of the carbon-carbon composite brake disc; and subsequently
applying an anti-oxidant solution to the non-friction surfaces of the resulting carbon-carbon composite brake disc.
